# FASCICULE DE BREVET EUROPEEN

(11) **EP 3 469 013 B1**
(45) Date de publication et mention de la délivrance du brevet: **09.11.2022**
(21) Numéro de dépôt: 17784335.6
(22) Date de dépôt: 09.06.2017
(51) Int. Cl.: C08G 63/672

(54) **POLYESTER THERMOPLASTIQUE AMORPHE POUR LA FABRICATION DE FEUILLES THERMOFORMABLES**
AMORPHES THERMOPLASTISCHES POLYESTER ZUR HERSTELLUNG VON THERMOFORMBAREN FOLIEN
AMORPHOUS THERMOPLASTIC POLYESTER FOR THE PRODUCTION OF THERMOFORMABLE SHEETS

(30) Priorité: 10.06.2016 FR 1655368
(43) Date de publication de la demande: 17.04.2019
(73) Titulaire: Roquette Frères, 62136 Lestrem (FR)
(72) Inventeur: AMEDRO, Hélène, 62400 Béthune (FR); SAINT-LOUP, René, 59160 Lomme (FR)
(74) Mandataire: Plasseraud IP
(86) Numéro de dépôt international: PCT/FR2017/051470
(87) Numéro de publication internationale: WO 2017/212191

(56) Documents cités:
- US-A1- 2012 177 854

## Description

### Domaine de l'invention

La présente invention se rapporte à l'utilisation d'un polyester thermoplastique amorphe comprenant au moins un motif 1,4 : 3,6-dianhydrohexitol pour la fabrication de feuilles thermoformables.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un problème de ces PEIT est qu'ils peuvent toujours présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées.

Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

Ainsi, malgré les modifications apportées aux PET, il existe toujours un besoin constant de nouveau polyester présentant des propriétés améliorées.

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. *Yoon et al.* ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Dans le domaine des matières plastiques, et notamment pour la fabrication d'objet par thermoformage, il est nécessaire afin de pouvoir fabriquer des feuilles thermoformables aux propriétés améliorées et dans un objectif constant de fournir des objets plastiques toujours plus performants, de disposer de polyesters spécifiques présentant notamment une viscosité importante.

A ce titre, on connait du brevet US 6,025,061 des feuilles obtenues à partir de polyester incluant de l'isosorbide, lesdites feuilles étant destinées à la fabrication d'objets plastiques.

En effet, ce document décrit des feuilles fabriquées à partir de polymères ayant des motifs isosorbide, des motifs acide téréphtalique et des motifs éthylène glycol. Les feuilles de polyester sont décrites comme pouvant être amorphes ou partiellement cristalline en fonction de l'application désirée. Cependant, l'ensemble des polymères décrit dans ce document contiennent des motifs d'éthylène glycol dont on sait qu'ils sont réfractaires pour certaines applications. De plus, les exemples de préparation mis en œuvre ne permettent pas d'obtenir des polyesters présentant une température de transition vitreuse satisfaisante pour la fabrication de feuilles thermoformables. Le document US 2012/177854 A1 décrit un procédé de préparation de compositions de polyesters à résistance à la chaleur élevée et forte tenue à l'impact (paragraphe [0004]). L'exemple 5 décrit une composition comprenant 100 moles d'acide terephthalique, 40 moles d'isosorbide, 55 moles de cyclohexane diméthanol, 5 moles d'éthylène glycol. L'isosorbide est présent avec le cyclohexane diméthanol dans un rapport de 40/(40+55), soit 0,42, valeur qui se trouve dans le domaine de 0,32 et 0,90. De plus l'indice de viscosité est 55 ml/g. De plus, la revendication 7 spécifie que le polyester est utilisé pour préparer des films et des feuilles, nécessairement thermoformables. Enfin la température de transition vitreuse du polyester de l'exemple 5 est de 130°C. Dans l'exemple 5, la concentration d'éthylène glycol (5 moles) par rapport à la totalité des motifs monomères du polyester (100 moles d'acide terephthalique, 40 moles d'isosorbide, 55 moles de cyclohexane diméthanol, 5 moles d'éthylène glycol) s'élève à 5 / (100+40+55+5), soit 25%.

Ainsi, il existe encore à ce jour le besoin de trouver de nouveaux polyesters thermoplastiques contenant des motifs 1,4 : 3,6-dianhydrohexitol pour la fabrication de feuilles thermoformables, lesdits polyesters ayant donc des propriétés mécaniques améliorées, pouvant être facilement mis en forme et présentant une résistance thermique ainsi qu'une résistance aux chocs élevées.

Il est donc du mérite de la Demanderesse d'avoir trouvé que cet objectif pouvait être atteint avec un polyester thermoplastique amorphe à base d'isosorbide ne présentant pas d'éthylène glycol alors qu'il était connu jusqu'à présent que ce dernier était indispensable pour l'incorporation dudit isosorbide. En effet, le polyester thermoplastique amorphe utilisé selon la présente invention, grâce à une viscosité réduite en solution et un ratio en motif particuliers, présente des propriétés améliorées pour une utilisation selon l'invention dans la fabrication de feuilles thermoformables.

### Résumé de l'invention

L'invention a ainsi pour objet l'utilisation d'un polyester thermoplastique amorphe pour la fabrication de feuilles thermoformables, ledit polyester thermoplastique amorphe comprenant au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;

le ratio molaire (A)/[(A)+(B)] étant d'au moins 0,32 et d'au plus 0,90 et la viscosité réduite en solution supérieure à 50 mL/g ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, dont la viscosité réduite en solution (25°C ; phénol (50%m) : ortho-dichlorobenzène (50%m) ; 5 g/L de polyester) est supérieure à 50 mL/g, ledit polyester présente une température de transition vitreuse allant de 115 à 200 °C.

Un autre objet de l'invention concerne une feuille thermoformable comprenant le polyester thermoplastique amorphe décrit ci-dessus.

Ces polyesters possèdent d'excellentes propriétés avec notamment une bonne tenue thermique du fait d'une température de transition vitreuse élevée, une transparence améliorée ainsi qu'une résistance au choc et aux rayures augmentée, ce qui est particulièrement intéressant pour la fabrication de feuilles thermoformables.

### Description détaillée de l'invention

Un premier objet de l'invention concerne l'utilisation d'un polyester thermoplastique amorphe pour la fabrication de feuilles thermoformables, ledit polyester thermoplastique amorphe comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
le ratio molaire (A)/[(A)+(B)] étant d'au moins 0,32 et d'au plus 0,90 et la viscosité réduite en solution supérieure à 50 mL/g.

Le polyester est exempt de motifs diol aliphatiques non cycliques ou en comprend une faible quantité.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Par « faible quantité molaire de motifs diol aliphatique non cyclique », on entend notamment une quantité molaire de motifs diol aliphatique non cyclique inférieure à 5%. Selon l'invention, cette quantité molaire représente le rapport de la somme des motifs diol aliphatiques non cycliques, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique amorphe présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol, ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. D'une manière préférentielle, le diol alicyclique (B) est le 1,4-cyclohexanedimethanol.

Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) étant d'au moins 0,32 et d'au plus 0,90.

Un polyester thermoplastique amorphe particulièrement adapté pour la fabrication de feuilles thermoformables comprend:
- une quantité molaire de motifs 1,4 : 3,6-dianhydrohexitol (A) allant de 16 à 54 % ;
- une quantité molaire de motifs diol alicyclique (B) autre que les motifs 1,4 : 3,6-dianhydrohexitol (A) allant de 5 à 30 % ;
- une quantité molaire de motifs acide téréphtalique (C) allant de 45 à 55 %.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques amorphes utilisés selon l'invention présentent une température de transition vitreuse allant de 115 à 200°C, par exemple de 140 à 190°C.

La température de transition vitreuse est mesurée par les méthodes classiques et notamment une méthode de calorimétrie différentielle à balayage (DSC) en utilisant une vitesse de chauffe de 10°C/min. Le protocole expérimental est détaillé dans la partie exemples ci-après.

Le polyester thermoplastique amorphe présente notamment une clarté L* supérieure à 40 Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution supérieure à 50 mL/g et inférieure à 90 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère amorphe des polyesters thermoplastiques utilisés selon la présente invention se caractérise, par l'absence de raies de diffraction aux rayons X ainsi que par l'absence d'un pic de fusion endothermique en Analyse Calorimétrique Différentielle à Balayage (DSC).

Le polyester thermoplastique amorphe tel que précédemment défini présente bien des avantages pour la fabrication de feuilles thermoformables.

En effet, grâce notamment au ratio molaire (A)/[(A)+(B)] d'au moins 0,32 et d'au plus 0,90 et grâce à une viscosité réduite en solution supérieure à 50 mL/g, les polyesters thermoplastiques amorphes ont une meilleure tenue thermique lorsqu'ils sont extrudés et ont des propriétés mécaniques qui s'en trouvent améliorées. Cette viscosité réduite en solution supérieure à 50 mL/g est particulièrement avantageuse car elle permet d'obtenir des feuilles aux propriétés améliorées comme une meilleure résistance mécanique et thermique, ces propriétés étant par la suite exploitées pour l'obtention d'objet par thermoformage desdites feuilles.

La différence entre une feuille et un film réside dans l'épaisseur en tant que telle. Cependant aucun standard industriel ne définit précisément l'épaisseur au-delà de laquelle un film est considéré comme une feuille. Ainsi, selon la présente invention, une feuille est définie comme ayant une épaisseur supérieure à 0,25 mm. De préférence, les feuilles thermoformables ont une épaisseur de 0,25 mm à 25 mm, particulièrement de 2 mm à 25 mm et encore plus particulièrement de 10 mm à 25 mm comme par exemple 20 mm.

Les feuilles peuvent être directement fabriquées à partir de l'état fondu après polymérisation du polyester thermoformable amorphe. Selon une alternative, le polyester thermoplastique amorphe peut être conditionné sous une forme facilement manipulable telle que des pellets ou des granulés avant d'être transformé en feuilles thermoformables.

Les feuilles fabriquées à partir du polyester thermoplastique amorphe peuvent être obtenues par les méthodes connues de l'homme du métier comme par exemple le calandrage, l'extrusion, la méthode de coulée, l'évaporation de solvant, le moulage par injection ou encore par une combinaison de ces méthodes. D'une manière préférentielle, les feuilles sont fabriquées par la méthode d'extrusion et notamment par l'extrusion avec filière à plat (aussi appelée *extrusion cast*)*.*

Pour l'extrusion avec filière à plat, le polyester thermoplastique amorphe peut par exemple être introduit sous forme de résine, de pellets ou sous forme de granulés. Les extrudeuses peuvent être des extrudeuses mono-vis ou bi-vis dans lesquelles la largeur et l'épaisseur des feuilles obtenues dépend de la filière utilisée.

Selon un mode de réalisation particulier et indépendamment de la méthode utilisée pour la fabrication de la feuille, le polyester thermoplastique amorphe peut être utilisé en combinaison avec un polymère additionnel.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères coeur-écorce ou des copolymères à bloc.

Un ou plusieurs additifs peuvent être ajoutés au polyester thermoplastique amorphe afin de conférer des propriétés supplémentaires aux feuilles obtenues.

Ainsi, l'additif peut être un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP ) ou comme la gamme des cyanurates mélaminés (par exemple les melapur^{™} : mélapur 200)ou des hydroxydes d'aluminium ou de magnésium.

Enfin, l'additif peut aussi être un agent de résistance aux rayures, comme par exemple des silices pyrogénées (par exemple la gamme Aerosil^{™} : aerosil R200 ou R974) ou des produits avec des oxydes de titane (par exemple les Atmer^{™} de Croda) ou encore des dérivés de molécules hydrophobes (par exemple les Incroslip ^{™} de Croda).

Une fois extrudées, les feuilles sont refroidies grâce à une multitude de cylindres. L'aspect de surface des feuilles peut être contrôlé et ajusté en fonction des rouleaux utilisés, les feuilles obtenues peuvent donc ainsi présenter un aspect lisse ou un aspect texturé. Enfin, les feuilles peuvent être monocouches ou multicouches en fonction des propriétés désirées.

Les feuilles ainsi fabriquées, selon l'utilisation de la présente invention à partir du polyester thermoplastique amorphe, sont dites thermoformables, en ce sens qu'elles sont particulièrement adaptées pour un post-traitement par thermoformage notamment pour la fabrication d'objet.

Les objets fabriqués peuvent être de toutes sortes comme par exemple des barquettes, des gobelets, des emballages alimentaires, des coques de protection pour téléphone portable, des écrans, des afficheurs, de la signalétique, des skydomes, des vitres antichoc mais aussi notamment des objets stérilisables utilisés en milieu hospitalier comme du mobilier, des plateaux ou encore des vasques.

En effet, les bonnes propriétés mécaniques et thermiques des feuilles sont particulièrement recherchées pour la fabrication d'objet à l'usage hospitalier où les surfaces plastiques sont soumises à une multitude de traitement et notamment la stérilisation.

Un second objet de l'invention concerne des feuilles thermoformables comprenant le polyester thermoplastique amorphe décrit ci-dessus. Les feuilles thermoformables peuvent également comprendre un polymère additionnel et/ou un ou plusieurs additifs tels que définis ci-dessus.

Le polyester thermoplastique amorphe particulièrement adapté pour la fabrication de feuille thermoformable peut être préparé par un procédé de fabrication comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5%;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique amorphe

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de feuilles thermoformables.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US 2011/282020 A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou I'lrgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Le procédé comprend en outre une étape de récupération du polyester à l'issue de l'étape de polymérisation. Le polyester thermoplastique amorphe ainsi récupéré est ensuite mis en forme tel que décrit précédemment.

L'invention sera mieux comprise à l'aide des exemples qui suivent.

### Exemple

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : l'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais *mid-point*) du second chauffage. Les températures de fusion éventuelles sont déterminées sur le pic endothermique (début du pic (en anglais, *onset*)) au premier chauffage. De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich

### Préparation et mise en forme de feuilles thermoformables

### A : Polymérisation

Dans un réacteur de 7,5L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C. Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90minutes selon une rampe logarithmique et la température amenée à 285°C. Ces conditions de vide et de température ont été maintenues jusqu'à obtenir une augmentation de couple de 10Nm par rapport au couple initial. Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 54.9 mUg. L'analyse par RMN 1H du polyester montre que le polyester final contient 44mol% d'isosorbide par rapport aux diols. En ce qui concerne les propriétés thermiques (relevées au second chauffage), le polymère présente une température de transition vitreuse de 125°C.

### B : Extrusion de feuille et thermoformage

Les granulés obtenus après l'étape A de polymérisation sont séchés sous vide à 110°C afin d'atteindre des taux d'humidité résiduelle inférieurs à 300 ppm, dans cet exemple, la teneur en eau des granulés est de 180 ppm.

Les granulés, maintenus en atmosphère sèche sont ensuite extrudés sous forme de feuille par extrusion de films à plat, aussi appelée extrusion cast.

L'*extrusion cast* a été réalisée avec une extrudeuse Collin équipée d'une filière plate, l'ensemble étant complété par une calandreuse. La feuille extrudée a une épaisseur de 2 mm. Les paramètres d'extrusion sont regroupés dans le tableau 1 ci-dessous :

**Tableau 1**

| **Paramètres** | **Unités** | **Valeurs** |
|---|---|---|
| Température | °C | 245/250/260/260/260 |
| Vitesse de rotation de la vis | Rpm | 80 |
| Température des rouleaux | °C | 40 |

Les feuilles extrudées sont ensuite thermoformées sous la forme de barquette en utilisant une thermoformeuse TF 7050 EVO (Bassompierre - Scientax). La feuille est fixée sur le cadre puis chauffée à 170°C grâce au plateau chauffant à infra-rouge. Après thermoformage, la pièce est refroidie par l'intermédiaire de ventilateurs.

Les barquettes obtenues à partir de polyester thermoplastique amorphe présentant notamment une viscosité réduite en solution supérieure à 50 mL/g présentent ainsi des propriétés mécaniques améliorées comparativement à des barquettes obtenues à partir de feuilles thermoplastiques non fabriquées à base desdits polyester.

## Revendications

1. Utilisation d'un polyester thermoplastique amorphe pour la fabrication de feuilles thermoformables, ledit polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g ledit polyester présente une température de transition vitreuse allant de 115 à 200 °C, déterminée comme indiqué dans la description.

2. Utilisation selon la revendication 1 **caractérisé en ce que** ledit polyester présente une température de transition vitreuse allant de 140 à 190 °C.

3. Feuille thermoformable comprenant un polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50mL/g, ledit polyester présente une température de transition vitreuse allant de 115 à 200 °C, déterminée comme indiqué dans la description.

4. Feuille thermoformable selon la revendication 3 **caractérisé en ce que** ledit polyester présente une température de transition vitreuse allant de 140 à 190°.

5. Utilisation selon la revendication 1 ou feuille thermoformable selon la revendication 3, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol

6. Utilisation selon l'une quelconque des revendications 1, 2 ou 5 ou feuille thermoformable selon la revendication 3 ou 4, **caractérisée en ce que** le 1,4 : 3,6-dianhydrohexitol (A) est l'isosorbide.

7. Utilisation selon l'une quelconque des revendications 1, 2, 5 ou 6 ou feuille thermoformable selon l'une quelconque des revendications 3 ou 4, **caractérisée en ce que** la feuilles présente une épaisseur de 0,25 mm à 25 mm, particulièrement de 2 mm à 25 mm, et encore plus particulièrement de 10 mm à 25 mm.

8. Utilisation selon l'une quelconque des revendications 1, 2, 5 ou 6 ou feuille thermoformable selon l'une quelconque des revendications 3 ou 4, **caractérisée en ce que** la feuille thermoformable comprend un agent de résistance aux UV, un agent ignifuge ou retardateur de flamme ou encore un agent de résistance aux rayures.

## Patentansprüche

1. Verwendung eines amorphen thermoplastischen Polyesters zur Herstellung von thermoformbaren Folien, wobei der amorphe thermoplastische Polyester umfasst:
• wenigstens eine 1,4:3,6-Dianhydrohexitol-Einheit (A);
• wenigstens eine alicyclische Diol-Einheit (B), die von den 1,4:3,6-Dianhydrohexitol-Einheiten (A) verschieden ist;
• wenigstens eine Terephthalsäure-Einheit (C);
wobei das Molverhältnis (A)/[(A)+(B)] wenigstens 0,32 und höchstens 0,90 beträgt;
wobei der Polyester frei von nicht cyclischen aliphatischen Diol-Einheiten ist oder eine molare Menge an nicht cyclischen aliphatischen Diol-Einheiten, bezogen auf die Gesamtheit der Monomer-Einheiten des Polyesters, von weniger als % umfasst und dessen reduzierte Viskosität in Lösung (25 °C; Phenol (50 %m) : ortho-Dichlorbenzol (50 %m); 5 g/l Polyester) größer als 50 ml/g ist, wobei der Polyester eine Glasübergangstemperatur im Bereich von 115 bis 200 °C aufweist, die wie in der Beschreibung angegeben bestimmt wird.

2. Verwendung nach Anspruch 1, **dadurch gekennzeichnet, dass** der Polyester eine Glasübergangstemperatur von 140 bis 190 °C aufweist.

3. Thermoformbare Folie, umfassend einen amorphen thermoplastischen Polyester, umfassend:
• wenigstens eine 1,4:3,6-Dianhydrohexitol-Einheit (A);
• wenigstens eine alicyclische Diol-Einheit (B), die von den 1,4:3,6-Dianhydrohexitol-Einheiten (A) verschieden ist;
• wenigstens eine Terephthalsäure-Einheit (C);
wobei das Molverhältnis (A)/[(A)+(B)] wenigstens 0,32 und höchstens 0,90 beträgt;
wobei der Polyester frei von nicht cyclischen aliphatischen Diol-Einheiten ist oder eine molare Menge an nicht cyclischen aliphatischen Diol-Einheiten, bezogen auf die Gesamtheit der monomeren Einheiten des Polyesters, von weniger als 1 % enthält und dessen reduzierte Lösungsviskosität (25 °C; Phenol (50 %m) : ortho-Dichlorbenzol (50 %m); 5 g/l Polyester) größer als 50ml/g ist, wobei der Polyester eine Glasübergangstemperatur von 115 bis 200 °C aufweist, die wie in der Beschreibung angegeben bestimmt wird.

4. Thermoformbare Folie nach Anspruch 3, **dadurch gekennzeichnet, dass** der Polyester eine Glasübergangstemperatur von 140 bis 190 °C aufweist.

5. Verwendung nach Anspruch oder thermoformbare Folie nach Anspruch 3, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, stark bevorzugt 1,4-Cyclohexandimethanol.

6. Verwendung nach einem der Ansprüche 1, 2 oder 5 oder thermoformbare Folie nach Anspruch 3 oder 4, **dadurch gekennzeichnet, dass** das 1,4:3,6-Dianhydrohexitol (A) Isosorbid ist.

7. Verwendung nach einem der Ansprüche 1, 2, 5 oder 6 oder thermoformbare Folie nach einem der Ansprüche 3 oder 4, **dadurch gekennzeichnet, dass** die Folie eine Dicke von 0,25 mm bis 25 mm, insbesondere von 2 mm bis 25 mm, und insbesondere von 10 mm bis 25 mm aufweist.

8. Verwendung nach einem der Ansprüche 1, 2, 5 oder 6 oder thermoformbare Folie nach einem der Ansprüche 3 oder 4, **dadurch gekennzeichnet, dass** die thermoformbare Folie ein UV-Beständigkeitsmittel, ein flammhemmendes oder flammverzögerndes Mittel oder auch ein kratzfestes Mittel enthält.

## Claims

1. The use of an amorphous thermoplastic polyester for the production of thermoformable sheets, said amorphous thermoplastic polyester comprising:
• at least one 1,4: 3,6-dianhydrohexitol unit (A);
• at least one alicyclic diol unit (B) other than the 1,4: 3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of said polyester being greater than 50 ml/g,
said polyester having a glass transition temperature ranging from 115 to 200°C measured as indicated in the description.

2. The use as claimed in claim 1 **characterized in that** the said polyester having a glass transition temperature ranging from 140 to 190°C.

3. A thermoformable sheet comprising an amorphous thermoplastic polyester comprising:
• at least one 1,4: 3,6-dianhydrohexitol unit (A);
• at least one alicyclic diol unit (B) other than the 1,4: 3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 5%, and the reduced viscosity in solution (25°C; phenol (50%m): ortho-dichlorobenzene (50%m); 5 g/l of polyester) of said polyester being greater than 50 ml/g said polyester having a glass transition temperature ranging from 115 to 200°C measured as indicated in the description.

4. The thermoformable sheet as claimed in claim 3 **characterized in that** the said polyester having a glass transition temperature ranging from 140 to 190°C.

5. The use as claimed in claim 1 or the thermoformable sheet as claimed in claim 3, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

6. The use as claimed in either of claims 1, 2 or 5, or the thermoformable sheet as claimed in in either of claims 3 or 4, **characterized in that** the 1,4: 3,6-dianhydrohexitol (A) is isosorbide.

7. The use as claimed in any one of claims 1, 2, 5 or 6 or the thermoformable sheet as claimed in any one of claims 3 or 4, **characterized in that** the sheet has a thickness of 0.25 mm to 25 mm, particularly of 2 mm to 25 mm, and even more particularly of 10 mm to 25 mm.

8. The use as claimed in any one of claims 1, 2, 5 or 6 or the thermoformable sheet as claimed in any one of claims 3 or 4, **characterized in that** the thermoformable sheet comprises a UV-resistance agent, a fire-proofing agent or flame retardant, or else a scratch-resistance agent.
